(19) Europäisches Patentamt

European Patent Office

Office européen des brevets

(11) **EP 1 619 733 A1**

(12) **EUROPEAN PATENT APPLICATION**

(43) Date of publication:
**25.01.2006 Bulletin 2006/04**

(51) Int Cl.:
*H01M 4/48* (2006.01)          *H01M 4/50* (2006.01)
*H01M 4/52* (2006.01)

(21) Application number: **05015785.8**

(22) Date of filing: **20.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.07.2004 JP 2004213110**
**17.06.2005 JP 2005177438**
**05.07.2005 JP 2005196435**

(71) Applicant: **SANYO ELECTRIC CO., LTD.**
**Moriguchi-shi, Osaka (JP)**

(72) Inventors:
• **Imachi, Naoki**
**Kobe-shi**
**Hyogo 651-2273 (JP)**

• **Takano, Yasuo**
**Kobe-shi**
**Hyogo 652-0047 (JP)**
• **Yoshimura, Seiji**
**Nishi-ku**
**Kobe-shi 651-2108 (JP)**
• **Fujitani, Shin**
**Nishi-ku**
**Kobe-shi 651-2108 (JP)**

(74) Representative: **Glawe, Delfs, Moll**
**Patentanwälte**
**Postfach 26 01 62**
**80058 München (DE)**

(54) **Non-aqueous electrolyte battery**

(57)     A non-aqueous electrolyte battery is provided that is capable of improving safety, particularly the tolerance of the battery to overcharging, without compromising conventional battery constructions considerably. A non-aqueous electrolyte battery is furnished with a positive electrode including a positive electrode active material-layer (2) containing a plurality of positive electrode active materials and being formed on a surface of a positive electrode current collector (1), a negative electrode including a negative electrode active material layer (4), and a separator (3) interposed between the electrodes. The positive electrode active material-layer (2) is composed of two layers (2a) and (2b) having different positive electrode active materials, and of the two layers (2a) and (2b), the layer (2b) that is nearer the positive electrode current collector contains, as its main active material, a spinel-type lithium manganese oxide or an olivine-type lithium phosphate compound.

FIG. 3

**Description**

BACKGROUND OF THE INVENTION

Field of the Invention

The present invention relates to improvements in non-aqueous electrolyte batteries, such as lithium-ion batteries and polymer batteries, and more particularly to non-aqueous electrolyte batteries that have excellent safety on overcharge.

Description of Related Art

Rapid advancements in size and weight reductions of mobile information terminal devices such as mobile telephones, notebook computers, and PDAs in recent years have created demands for higher capacity batteries as driving power sources for the devices. With their high energy density and high capacity, non-aqueous electrolyte batteries that perform charge and discharge by transferring lithium ions between the positive and negative electrodes have been widely used as the driving power sources for the mobile information terminal devices. Moreover, utilizing their characteristics, applications of non-aqueous electrolyte batteries, especially Li-ion batteries, have recently been broadened to middle-sized and large-sized batteries for power tools, electric automobiles, hybrid automobiles, etc., as well as mobile applications such as mobile telephones. As a consequence, demands for increased battery safety have been on the rise, along with demands for increased capacity and higher output power.

Many of commercially available non-aqueous electrolyte batteries, especially Li-ion batteries, adopt lithium cobalt oxide as their positive electrode active material. The energy that can be attained by lithium cobalt oxide, however, has almost reached the limit already; therefore, to achieve higher battery capacity, it has been inevitable to increase the filling density of the positive electrode active material. Nevertheless, increasing the filling density of the positive electrode active material causes battery safety to degrade when the battery is overcharged. In other words, since there is a trade-off between improvement in battery capacity and enhancement in battery safety, improvements in capacity of the battery have lately made little progress. Even if a new positive electrode active material that can serve as an alternative to lithium cobalt oxide will be developed in the future, the necessity of increasing the filling density of the positive electrode active material to achieve a further higher capacity will still remain the same because the energy that can be attained by that newly developed active material will also reach the limit sooner or later.

Conventional unit cells incorporate various safety mechanisms such as a separator shutdown function and additives to electrolyte solutions, but these mechanisms are designed assuming a condition in which the filling density of active material is not very high. For that reason, increasing the filling density of active material as described above brings about such problems as follows. Since the electrolyte solution's infiltrating performance into the interior of the electrodes is greatly reduced, reactions occur locally, causing lithium to deposit on the negative electrode surface. In addition, the convection of electrolyte solution is worsened and heat is entrapped within the electrodes, worsening heat dissipation. These prevent the above-mentioned safety mechanisms from fully exhibiting their functions, leading to further degradation in safety. Thus, it is necessary to establish a battery construction that can make full use of those safety mechanisms without considerably compromising conventional battery constructions.

To resolve the foregoing problems, various techniques have been proposed. For example, Japanese Published Unexamined Patent Application No. 2001-143705 proposes a Li-ion secondary battery that has improved safety using a positive electrode active material in which lithium cobalt oxide and lithium manganese oxide are mixed. Japanese Published Unexamined Patent Application No. 2001-143708 proposes a Li-ion secondary battery that improves storage performance and safety using a positive electrode active material in which two layers of lithium-nickel-cobalt composite oxides having different compositions are formed. Japanese Published Unexamined Patent Application No. 2001-338639 proposes a Li-ion secondary battery in which, for the purpose of enhancing battery safety determined by a nail penetration test, a plurality of layers are formed in the positive electrode and a material with high thermal stability is disposed in the lowermost layer of the positive electrode, to prevent the thermal runaway of the positive electrode due to heat that transfers via the current collector to the entire battery.

The above-described conventional batteries have the following problems.

(1) JP 2001-143705A

Merely mixing lithium cobalt oxide and lithium manganese oxide cannot fully exploit the advantage of lithium manganese oxide, which has excellent safety. Therefore, an improvement in safety cannot be attained.

(2) JP 2001-143708A

With lithium-nickel-cobalt composite oxide, lithium ions that can be extracted from its crystals exist in the crystals when overcharged, and the lithium can deposit on the negative electrode and become a source of heat generation. For this reason, safety on overcharge etc. cannot be improved sufficiently.

(3) JP 2001-338639A

The above-described construction is intended for merely preventing the thermal runaway of a battery due to heat dissipation through the current collector under a certain voltage, and is not effective in preventing the thermal runaway of an active material that originates from deposited lithium on the negative electrode such as when overcharged. (The details will be discussed later.)

BRIEF SUMMARY OF THE INVENTION

Accordingly, it is an object of the present invention to provide a non-aqueous electrolyte battery that achieves improvements in safety, particularly in tolerance of the battery to overcharging, without compromising conventional battery constructions considerably.

In order to accomplish the foregoing and other objects, the present invention provides a non-aqueous electrolyte battery comprising: a positive electrode including a positive electrode active material-layer and a positive electrode current collector, the positive electrode active material-layer being formed on a surface of the positive electrode current collector and comprising a plurality of layers respectively having different positive electrode active materials, wherein, among the plurality of layers, a layer other than the outermost positive electrode layer contains as its main active material a positive electrode active material having the highest resistance increase rate during overcharging among the positive electrode active materials; a negative electrode including a negative electrode active material layer; and a separator interposed between the electrodes.

When, as in the foregoing construction, a layer other than the outermost positive electrode layer contains as its main active material the positive electrode active material having the highest resistance increase rate during overcharge among the positive electrode active materials, the current collection performance lowers in the outermost positive electrode layer, which has a high reactivity during overcharge, inhibiting the active material of the outermost positive electrode layer from being charged to the charge depth that is to be reached originally. Accordingly, the amount of lithium deintercalated from the positive electrode in the overcharge region (especially the amount of lithium deintercalated from the outermost positive electrode layer) reduces, causing the total amount of lithium deposited on the negative electrode to reduce. Consequently, the amount of heat produced due to the reaction between the electrolyte solution and the lithium deposited on the negative electrode reduces, thereby preventing the deposition of dendrite. Moreover, the thermal stability of the positive electrode active material (particularly of the active material in the outermost positive electrode layer that becomes instable because of the extraction of lithium from the crystals) is also kept relatively high because the charge depth does not become deep; therefore, the reaction between the positive electrode active material and the excessive electrolyte solution existing in the separator etc. can be inhibited. For the above reasons, the tolerance of the battery to overcharging can be improved remarkably.

BRIEF DESCRIPTION OF THE DRAWINGS

Fig. 1 is a view illustrating a heat transfer passage in a conventional positive electrode;
Fig. 2 is a view illustrating a heat transfer passage in the present invention;
Fig. 3 is a view illustrating a power-generating element of the present invention;
Fig. 4 is a view illustrating the state of a local exothermic reaction;
Fig. 5 is a plan view of a test cell for evaluating SD temperature and MD temperature of a separator;
Fig. 6 is a cross-sectional view of the test cell;
Fig. 7 is a graph showing charging time versus battery voltage, current, and battery temperature in Battery A1 of the invention;
Fig. 8 is a graph showing charging time versus battery voltage, current, and battery temperature in Comparative Battery U4;
Fig. 9 is a graph showing specific capacity versus positive electrode potential of $LiMn_2O_4$, $LiCoO_2$, and $LiFePO_4$;
Fig. 10 is a graph showing charging time versus battery voltage, current, and battery temperature of Battery F of the invention charged at a current of 1.0 It;

Fig. 11 is a graph showing charging time versus battery voltage, current, and battery temperature of Battery F of the invention charged at a current of 3.0 It;

Fig. 12 is a graph showing charging time versus battery voltage, current, and battery temperature of Comparative Battery Z charged at a current of 1.0 It; and

Fig. 13 is a graph showing charge voltage versus resistivity of lithium cobalt oxide, spinel-type lithium manganese oxide, and olivine-type lithium iron phosphate.

DETAILED DESCRIPTION OF THE INVENTION

Here, the present invention as summarized above is described more specifically in comparison with the technique disclosed in JP 2001-338639A (hereinafter simply referred to as the "conventional technique"), which is described above in the "Background of the Invention."

(1) Difference in reaction modes between the conventional technique and the present invention

The conventional technique employs a so-called static test, in which heat generation of a battery is caused by simply sticking a nail into the battery without accompanying a charge reaction. In contrast, the present invention adopts a so-called dynamic test, in which heat generation of a battery is caused by actually charging the battery. Specifically, the differences are as follows.

(I) Although both techniques deal with the problem of thermal runaway caused by heat generation of a battery, the conventional technique does not take a charge-discharge reaction into consideration, so the reaction takes place relatively uniformly in locations other than the location in which a nail is stuck. On the other hand, with the present invention, the electrolyte solution undergoes a decomposition reaction due to an actual charging operation, resulting in a gas formation. Therefore, the electrode reaction (charge reaction) becomes non-uniform, creating variations in the reaction from one location to another in the electrodes.

(II) The conventional technique is free from the problem of deposited lithium, so it is only necessary to take the thermal stability of the positive electrode into consideration. In contrast, since the present invention involves a charge reaction, the problem of dendrite due to the deposited lithium arises.

(III) Since the conventional technique does not involve a charge reaction, the thermal stability of the active material does not change over time. In contrast, because the present invention involves a charge reaction, the thermal stability of the active material varies greatly depending on the charge depth. Specifically, the greater the charge depth, the lower the stability of the active material.

As discussed in the foregoing (I) and (II), the reaction modes greatly differ between the conventional technique and the present invention, and therefore, it is obvious that a construction that is effective in the nail penetration test is not necessarily also effective in the overcharging test. Moreover, concerning the issue of thermal stability of active material as discussed in the foregoing (III) as well, the operations and advantageous effects will not be the same since there are differences in static or dynamic concepts between the conventional technique and the present invention.

(2) Difference in thermal transfer passage between the conventional technique and the present invention

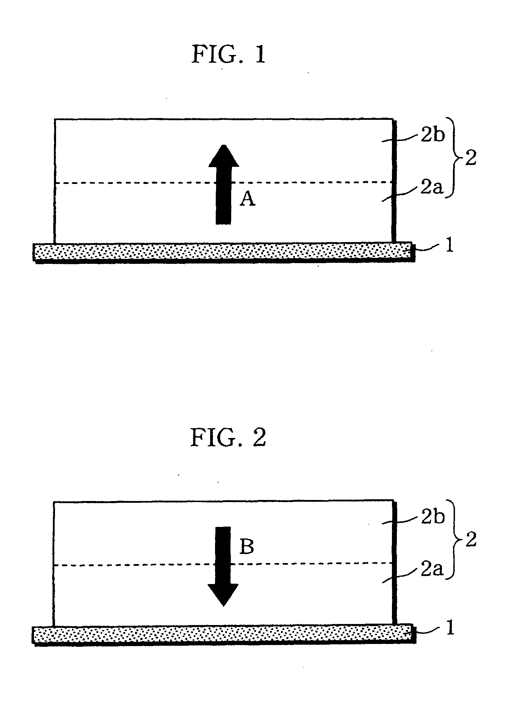

In the conventional technique, as described in the specification, generated heat spreads over the entire battery through the nail and the aluminum current collector, which have high thermal conductivities and thus serve as heat conductors. That is, as illustrated in Fig. 1, the heat transfers from a lower layer 2a toward an upper layer 2b (in the direction indicated by the arrow A) in a positive electrode active material 2. For this reason, the conventional technique employs a construction in which a material having a higher thermal stability is arranged in the lower layer. On the other hand, in the present invention, what causes a reaction initially when overcharged is lithium deposited on the negative electrode surface. Therefore, as illustrated in Fig. 2, heat transfers from the upper layer 2b toward the lower layer 2a (in the direction indicated by the arrow B) in the positive electrode active material 2. In Figs. 1 and 2, reference numeral 1 denotes a positive electrode current collector.

(3) Characteristic features of the present invention based on the differences discussed above

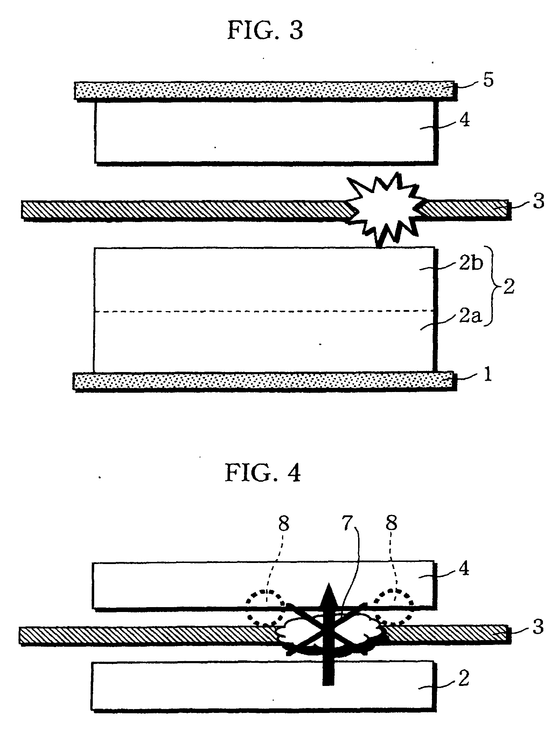

When taking improvement in tolerance of the battery to overcharging into consideration, it is effective to employ a construction in which a layer of the positive electrode that is other than the outermost positive electrode layer (the lower layer 2a in Fig. 3) contains as its main active material a positive electrode active material that has the highest resistance increase rate during overcharging, as illustrated in Fig. 3. (In Fig. 3, the parts having the same functions as those in Figs. 1 and 2 are designated by the same reference characters. The same reference characters are also used in Fig. 4, which will be discussed later.)

With the above-described construction, the current collection performance of the outermost positive electrode layer 2b lowers, reducing the amount of lithium deposited on the negative electrode 4, and the charge depth of the active material in the outermost positive electrode layer 2b becomes less; as a consequence, a thermal runaway reaction does not easily occur. Thus, it is possible to reduce the total amount of heat produced within the battery and prevent the thermal stability of the active material at the surface from degrading.

The improvement in the positive electrode structure as described above makes it possible to prevent the deposition of lithium and reduce the total amount of heat produced in the battery. Consequently, the tolerance of the battery to overcharging improves remarkably.

In the non-aqueous electrolyte battery of the invention, the layer other than the outermost positive electrode layer may be in contact with the current collector.

When the layer that is in contact with the current collector contains the positive electrode active material having the highest resistance increase rate during overcharging among the active materials as its main active material, current collection performance lowers in all the layers other than the layer that is in contact with the current collector. Thus, the advantageous effects of the invention can be exerted more effectively.

In the non-aqueous electrolyte battery of the invention, the main active material in the positive electrode active material of the layer other than the outermost positive electrode layer may comprise a spinel-type lithium manganese oxide.

The spinel-type lithium manganese oxide deintercalates most of the lithium ions from the interior of the crystals during charge to 4.2 V, so almost no lithium ions can be extracted from the interior of the crystals even when overcharged beyond 4.2 V, leading to a very high resistance increase on overcharge. Accordingly, the advantageous effects of the invention can be exerted more effectively.

In the non-aqueous electrolyte battery of the invention, the main active material in the positive electrode active material of the layer other than the outermost positive electrode layer consists of a spinel-type lithium manganese oxide.

This construction can exploit the advantages of the spinel-type lithium manganese oxide more effectively; therefore, the advantageous effects of the invention can be exerted more effectively.

In the non-aqueous electrolyte battery of the invention, the main active material in the positive electrode active material of the layer other than the outermost positive electrode layer may comprise an olivine-type lithium phosphate compound represented by the general formula $LiMPO_4$, where M is at least one element selected from the group consisting of Fe, Ni, and Mn.

The olivine-type lithium phosphate compound shows a greater increase in the direct current resistance at the time when lithium ions are extracted from the interior of the crystals than the spinel-type lithium manganese oxide. The reason is probably dependent on the crystal structure of the positive electrode active material. It is believed that the spinel-type lithium manganese oxide shows a less increase in the direct current resistance because it has some oxygen holes in its spinel structure and electrons flow through the defects. In contrast, the olivine-type lithium phosphate compound has almost no such defects and therefore shows a greater increase in the resistance. In addition, the olivine-type lithium phosphate compound exhibits a lower potential than the spinel-type lithium manganese oxide when almost all the lithium ions have been extracted from the interior of the crystals, the above-described advantageous effects emerge before reaching the charge depth at which the lithium cobalt oxide etc. located nearer the surface of the positive electrode starts to degrade in terms of safety. Thus, the advantageous effects of the present invention are exerted more effectively.

In the non-aqueous electrolyte battery of the invention, the main active material in the positive electrode active material of the layer other than the outermost positive electrode layer may consist of an olivine-type lithium phosphate compound represented by the general formula $LiMPO_4$, where M is at least one element selected from the group consisting of Fe, Ni, and Mn.

This construction can exploit the advantages of the olivine-type lithium phosphate compound more effectively. Therefore, the advantageous effects of the invention will be enhanced.

In the non-aqueous electrolyte battery of the invention, the positive electrode active material-layer may contain lithium cobalt oxide as a positive electrode active material.

Lithium cobalt oxide has a large capacity per unit volume. Therefore, when the positive electrode active material contains lithium cobalt oxide as in the foregoing construction, enhancement of battery capacity is possible.

In the non-aqueous electrolyte battery of the invention, the positive electrode active material-layer may contain lithium cobalt oxide as a positive electrode active material, and the total mass of the lithium cobalt oxide is greater than the total mass of the spinel-type lithium manganese oxide in the positive electrode active material-layer.

When, as in the foregoing construction, the positive electrode active material-layer contains lithium cobalt oxide as a positive electrode active material and the total mass of the lithium cobalt oxide is restricted to be greater than the total mass of the spinel-type lithium manganese oxide, the energy density of the battery can be increased as a whole because the lithium cobalt oxide has a greater specific capacity than the spinel-type lithium manganese oxide.

In the non-aqueous electrolyte battery of the invention, the positive electrode active material-layer may contain lithium cobalt oxide as a positive electrode active material, and the total mass of the lithium cobalt oxide is greater than the total mass of the olivine-type lithium phosphate compound in the positive electrode active material-layer.

When, as in the foregoing construction, the positive electrode active material-layer contains lithium cobalt oxide as a positive electrode active material and the total mass of the lithium cobalt oxide is restricted to be greater than the total mass of the olivine-type lithium phosphate compound, the energy density of the battery can be increased as a whole because the lithium cobalt oxide has a greater specific capacity than the olivine-type lithium phosphate compound.

In the non-aqueous electrolyte battery of the invention, the lithium cobalt oxide may exist in the outermost positive electrode layer.

When the lithium cobalt oxide exists in the outermost positive electrode layer, the current collection performance of the lithium cobalt oxide lowers further and the lithium cobalt oxide is inhibited from being charged to the charge depth that is to be reached originally. Thus, the amount of lithium deintercalated from the lithium cobalt oxide, which contains a large amount of lithium even in the overcharge region, decreases remarkably, and the amount of heat produced due to the reaction between the electrolyte solution and the lithium deposited on the negative electrode accordingly reduces remarkably. Moreover, the thermal stability of the lithium cobalt oxide is also kept relatively high.

In the non-aqueous electrolyte battery of the invention, the separator may have a meltdown temperature of 180°C or higher.

The use of separator having a meltdown temperature of 180°C or higher can prevent internal short circuits and therefore, together with adopting the foregoing positive electrode structure as in the present invention, the tolerance of the battery to overcharging can improve further. Specifically, the reasons are as follows.

When current collection performance between the positive and negative electrodes lowers due to the gas generation that originates from the decomposition of the electrolyte solution (i.e., the reaction area decreases) or the amount of the electrolyte solution decreases within the electrodes due to the reaction of the electrolyte solution, an exothermic reaction occurs locally in a peripheral region in which these behaviors take place (locations indicated by reference numeral 8 in Fig. 4, wherein the behavior take place at a location 7). (It is believed that the heat originating from the deposited lithium alone can bring the temperature to about 165°C locally.) Thereby, the separator can melt down (commonly-used polyethylene separators melt down at about 165°C) or undergo heat-shrinkage, causing internal short circuits. To overcome this problem, the use of a separator having a meltdown temperature of 180°C or higher (a separator having a meltdown temperature higher than that of commonly used polyethylene microporous films) can further prevent the breakage or heat-shrinkage of separator even when the local exothermic reaction occurs, further inhibiting internal short circuiting of the battery.

It should be noted that the conventional technique described previously does not take the problems of the meltdown and heat shrinkage of the separator into any consideration and therefore does not exert the above-described advantageous effect.

In the non-aqueous electrolyte battery of the invention, the separator may be an electron-beam cross-linked separator, in which cross-linking is effected by irradiating a microporous polyethylene film with an electron beam.

Although the electron-beam cross-linked separator can results in a higher meltdown temperature than non-cross-linked polyethylene separators, it does not at all affect other physical properties of the separator (for example, shutdown temperature etc.). Consequently, meltdown of the separator can be prevented while its shutdown function is exhibited sufficiently.

In the non-aqueous electrolyte battery of the invention, the separator may comprise a microporous polyethylene film and a microporous film having a melting point of 200°C or higher stacked over the microporous polyethylene film.

The use of the heat-proof layer-stacked separator can attain a further higher separator meltdown temperature, preventing separator meltdown more effectively.

In the non-aqueous electrolyte battery of the invention, the microporous film having a melting point of 200°C or higher may be a microporous film made of polyamide, polyimide, or polyamideimide.

The microporous film made of polyamide, polyimide, or polyamideimide is offered as an illustrative example of the microporous film having a melting point of 200°C or higher, but this is not intended to be limiting of the present invention.

In the non-aqueous electrolyte battery of the invention, the microporous film made of polyamide, polyimide, or polyamideimide may have a melting point of from 200°C to 400°C.

The non-aqueous electrolyte battery of the invention may further comprise a battery case for accommodating a power-generating element containing the positive and negative electrodes and the separator, the battery case being flexible.

In addition to the function to increase the resistance because of the extraction of lithium ions from the interior of the crystals during charging as discussed above, the olivine-type lithium phosphate compound shows weaker capability of decomposing the electrolyte solution in the oxidation state than both the spinel-type lithium manganese oxide and lithium cobalt oxide and produces a less amount of gas originating from the decomposition of the electrolyte solution in the overcharged state. For this reason, the use of the olivine-type lithium phosphate compound as a positive electrode active material can also prevent the problem of short circuiting within the battery even when a flexible battery case is used because the problem of swelling of the battery does not easily occur. An example of the battery case that is flexible include, but is not limited to, an aluminum laminate battery case.

The present invention achieves the advantageous effect of improvement in safety, particularly improvement in the tolerance of a battery to overcharging, without compromising conventional battery constructions considerably.

DESCRIPTION OF PREFERRED EMBODIMENTS

Hereinbelow, the present invention is described in further detail referring to a working example of the battery according to the invention. It should be construed, however, that the present invention is not limited to the following examples but various changes and modifications are possible without departing from the scope of the invention.

*Preparation of Positive Electrode*

First, a spinel-type lithium manganese oxide (hereinafter also abbreviated as "LMO"), used as a positive electrode active material, and SP300 (conductive agent, made by Nippon Graphite Industries, Ltd.) and acetylene black, used as carbon conductive agents, were mixed together at a mass ratio of 92 : 3 : 2 to prepare a positive electrode mixture powder. Next, 200g of the resultant powder was charged into a mixer (for example, a mechanofusion system AM-15F made by Hosokawa Micron Corp.), and the mixer was operated at a rate of 1500 rpm for 10 minutes to cause compression, shock, and shear actions while mixing, to prepare a positive electrode active material mixture. Subsequently, the resultant positive electrode active material mixture and a fluoropolymer-based binder agent (PVDF) were mixed at a mass ratio of 97 : 3 in N-methyl-2-pyrrolidone (NMP) solvent to prepare a positive electrode slurry. Thereafter, the positive electrode slurry was applied onto both sides of an aluminum foil, serving as a positive electrode current collector, and the resultant material was then dried and pressure-rolled. Thus, a first positive electrode active material layer was formed on a surface of the positive electrode current collector.

Subsequently, another positive electrode slurry was prepared in the same manner as described above except that lithium cobalt oxide (which may hereinafter be abbreviated to as "LCO") was used as the positive electrode active material. Further, the positive electrode slurry was applied onto the first positive electrode active material layer, and the resultant material was dried and pressure-rolled, whereby a second positive electrode active material layer was formed on the first positive electrode active material layer.

The foregoing procedure resulted in a positive electrode. The mass ratio of the respective positive electrode active materials in the positive electrode was LCO : LMO = 70 : 30.

*Preparation of Negative Electrode*

A carbon material (graphite), CMC (carboxymethylcellulose sodium), and SBR (styrene-butadiene rubber) were mixed in an aqueous solution at a mass ratio of 98:1:1 to prepare a negative electrode slurry. Thereafter, the negative electrode slurry was applied onto both sides of a copper foil serving as a negative electrode current collector, and the resultant material was then dried and rolled. Thus, a negative electrode was prepared.

*Preparation ofNon-aqueous Electrolyte Solution*

$LiPF_6$ was dissolved at a concentration of 1.0 mole/L in a mixed solvent of 3 : 7 volume ratio of ethylene carbonate (EC) and diethyl carbonate (DEC) to prepare a non-aqueous electrolyte solution.

*Preparation of Separator*

A separator was prepared by irradiating a commonly-used polyethylene (hereinafter also abbreviated as "PE") microporous film with an electron beam. Irradiating the commonly-used separator with an electron beam in this way causes the PE to form a cross-linked structure, thereby yielding an electron beam cross-linked separator. The film thickness of the separator was 16 $\mu$m.

*Construction of Battery*

Lead terminals were attached to the positive and negative electrodes, and the positive and negative electrodes were wound in a spiral form with the separator interposed therebetween. The wound electrodes were then pressed into a flat shape to obtain a power-generating element, and thereafter, the power-generating element was accommodated into an enclosing space made by an aluminum laminate film serving as a battery case. Then, the non-aqueous electrolyte solution was filled into the space, and thereafter the battery case was sealed by welding the aluminum laminate film. Thus, a battery was fabricated.

The battery thus fabricated had a design capacity of 650 mAh.

EMBODIMENTS

Preliminary Experiment

Shutdown temperature (hereinafter also referred to as "SD temperature") and meltdown temperature (hereinafter also referred to as "MD temperature") were investigated with the foregoing electron beam cross-linked separator (used in later-described Batteries A1, A4, B1, C1, and D1 of the invention, as well as Comparative Batteries U1, V1, W1, and X1), a heat-proof layer-stacked separator (used in later-described Batteries A2, A5, and D2 of the invention as well as Comparative Batteries U3, V2, W2, X3, Y, and Z), and an ordinary separator (used in later-described Batteries A3, A6, B2, C2, D3, D4, E, and F of the invention as well as Comparative Batteries U3, V2, W2, X3, Y, and Z). The results are shown in Table 1. The method of fabricating test cells, the evaluation equipment, and the method of measuring SD temperature and MD temperature were as follows.

*Fabrication Method of Test Cell*

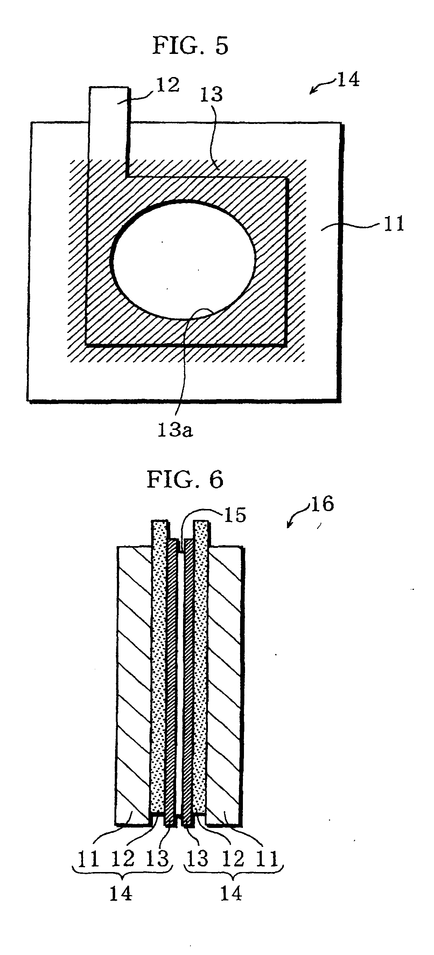

As illustrated in Fig. 5, a substantially square-shaped aluminum foil 12 (thickness: 15 $\mu$m) was disposed on one side of a glass substrate 11, and a poly-imide tape 13 was affixed to and covered the surface of the aluminum foil 12 to produce a cell piece 14. Two cell pieces 14 were prepared, and as illustrated in Fig. 6, a sample of the foregoing separators 15 was placed between the two cell pieces 14, 14, which were fastened by clips, to prepare a test cell 16.

The poly-imide tape 13 was affixed to prevent short-circuiting due to burrs, and a 19-mm diameter hole 13a was formed at approximately the center of the poly-imide tape 13.

The electrolyte solution of the test cell 16 used was $\gamma$-butyrolactone in which $LiBF_4$ as a solute was dissolved at a concentration of 0.5 mole/liter and 1 mass % of trioctyl phosphate as a surfactant was added to ensure wettability. This electrolyte solution was used taking into consideration the stability and boiling point of the solvent under heating to 200°C or higher.

*Evaluation Equipment*

- Electric furnace AMF-10 and digital temperature controller AMF-2P (temperature accuracy: $\pm$ 1 °C/min), made by Asahi Rika Seikakusho Co., Ltd.
- LCR meter 3522 made by Hioki E. E. Corp.

*Measurement Method of SD (Shutdown) Temperature and MD (Meltdown) Temperature*

Using the foregoing test cell 16, a measurement was conducted to study the physical properties of the separators under the condition in which a temperature elevation rate was fast (20°C/min, assuming an actual overcharge condition).

While the temperature was elevated from room temperature to about 210°C at the foregoing temperature elevation rate, a change in the resistance value between the electrodes was measured. A temperature obtained at the time when the resistance value greatly increased (due to clogging of micropores in the separator caused by melting of the fuse component, i.e., low-melting point component) was determined as the SD temperature, and a temperature obtained at the time when the resistance value dropped (due to the contact between the electrodes caused by melting down of the separator) was determined as the MD temperature.

TABLE 1

| Separator type | SD temperature | MD temperature |
|---|---|---|
| Electron beam cross-linked separator | 140°C | 185°C |
| Heat-proof layer stacked separator | 140°C | 200°C or higher |
| Conventional separator | 140°C | 165°C |

Table 1 clearly shows that all the separators had a SD temperature of 140°C. On the other hand, it is appreciated that the ordinary separator showed an MD temperature of 165°C, while the electron beam cross-linked separator and the heat-proof layer-stacked separator exhibited higher temperatures, 185°C and 200°C or higher, respectively.

First Embodiment

Example A1

A battery fabricated in the same manner as described in the foregoing working example was used as Example A1.
The battery thus fabricated is hereinafter referred to as Battery A1 of the invention.

Example A2

A battery was fabricated in the same manner as in Example A1 above, except that a heat-proof layer-stacked separator was used in place of the electron beam cross-linked separator.
The battery thus fabricated is hereinafter referred to as Battery A2 of the invention.
Herein, the heat-proof layer-stacked separator was fabricated in the following manner.
First, polyamide (PA), which is a water-insoluble, heat-resistant material, was dissolved in N-methyl-2-pyrrolidone (NMP) solution, which is a water-soluble solvent, and the resultant solution underwent low-temperature condensation polymerization to prepare a polyamide-doped solution. Next, this doped solution was coated on one side of a polyethylene (PE) microporous film that is a substrate material to a predetermined thickness, and thereafter the coated substrate was immersed in water to remove the water-soluble NMP solvent and deposit/solidify the water-insoluble polyamide. Thus, a microporous polyamide film was formed on one side of the polyethylene film. Then, the microporous polyamide film was dried at a temperature lower than the melting point of polyethylene (specifically, at 80°C) to remove water therefrom, and thus, a separator comprising a stack of microporous films was obtained. It should be noted that the number and size of pores in the polyamide film can be varied by varying the concentration of polyamide in the water-soluble solvent. The film thickness of the separator was 18 $\mu$m (PE layer: 16 $\mu$m, PA layer: 2 $\mu$m).

Example A3

A battery was fabricated in the same manner as in Example A1 above, except that an ordinary separator was used in place of the electron beam cross-linked separator.
The battery thus fabricated is hereinafter referred to as Battery A3 of the invention.

Example A4 to A6

Batteries were fabricated in the same manners as in Examples A1, A2, and A3 above, except that a mixture of LCO and LMO was used in place of LCO alone as the positive electrode active material of the second positive electrode active material layer (the surface-side layer of the positive electrode active material layers) in the positive electrode.
The batteries thus fabricated are hereinafter referred to as Batteries A4 to A6 of the invention, respectively.

Comparative Examples U1 to U3

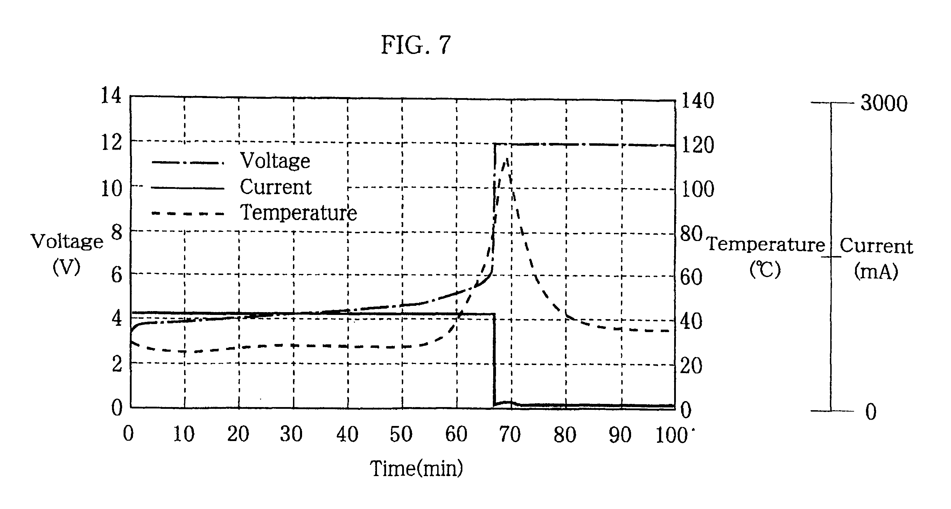

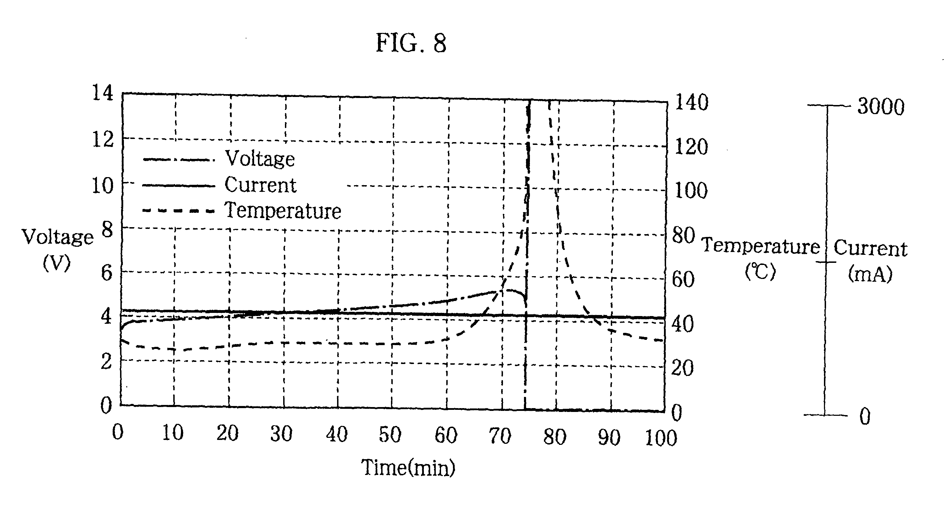

Batteries were fabricated in the same manners as in Examples A1 to A3 above, except that a single layer structure was adopted for the positive electrode active material-layer, instead of the double layer structure (a mixture of LCO and LMO was used as the positive electrode active materials).
The batteries thus fabricated are hereinafter referred to as Comparative Batteries U1 to U3, respectively.
Batteries A1 to A6 of the invention and Comparative Batteries U1 to U3 were studied for the tolerance to overcharging. The results are shown in Table 2. The conditions of the experiment were as follows. Samples of the respective batteries were subjected to a charge test using circuits that charge the batteries at respective currents of 1.0 It, 1.5 It, and 2.0 It until the battery voltages reached 12 V, with 1.0 It being defined as 600 mA, and then the batteries were charged at a constant voltage (without the lower current limit). After a voltage of 12 V was reached, the charging was continued for 3 hours. As for Battery A1 of the invention and Comparative Battery U1, their profiles of charging time versus current, voltage (battery voltage), and temperature (battery surface temperature) were studied by charging the batteries at a current of 1.5 It (900 mA). The results for Battery A1 of the invention and Comparative Battery U1 are shown in Figs. 7 and 8, respectively.
Usually, a battery (battery pack) is provided with a protection circuit or a protective device such as a PTC device so that the safety of the battery in abnormal conditions is ensured. For unit cells as well, various safety mechanisms are provided such as a separator shutdown function (the function to effect the insulation between the positive and negative electrodes by heat-clogging pores in the microporous film) and additives to electrolyte solution so that the safety can be ensured even without the protection circuit or the like. In the experiment, the materials and mechanisms for improving the safety were eliminated except for the separator shutdown function to prove the superiority in safety of the batteries of the invention, and the behaviors of the batteries on overcharge were studied.

TABLE 2

| Battery | Positive electrode structure | Positive electrode active material | | Separator | Number of batteries with short circuit Charge depth at SD activation (%) | | |
|---------|------------------------------|-----------------------------------|---|-----------|------------------------------------------------------------------------|---|---|
| | | Second positive electrode active material layer (Surface side) | First positive electrode active material layer (Current collector side) | | 1.0It overcharge | 1.5It overcharge | 2.0It overcharge |
| Battery A1 | Double layer | LCO | LMO | Electron beam cross-linked separator | No 154% | No 155% | No 153% |
| Battery A2 | Double layer | LCO | LMO | Heat-proof-layer stacked separator | No 156% | No 157% | No 154% |
| Battery A3 | Double layer | LCO | LMO | Ordinary separator | No 157% | 1/3 154% | 3/3 155% |
| Battery A4 | Double layer | LCO/LMO mixture | LMO | Electron beam cross-linked separator | No 157% | No 154% | 1/3 156% |
| Battery A5 | Double layer | LCO/LMO mixture | LMO | Heat-proof-layer stacked separator | No 157% | No 156% | No 153% |
| Battery A5 | Double layer | LCO/LMO mixture | LMO | Ordinary separator | No 155% | 2/3 154% | 3/3 156% |
| Comparative Battery U1 | Single layer | LMO/LCO mixture | | Electron beam cross-linked separator | No 169% | No 169% | 3/3 168% |
| Comparative Battery U2 | Single layer | LMO/LCO mixture | | Heat-proof-layer stacked separator | No 167% | No 167% | 2/3 167% |
| Comparative Battery U3 | Single layer | LMO/LCO mixture | | Ordinary separator | No 168% | No 168% | 3/3 168% |

The mass ratio of LCO ($LiCoO_2$) and LMO ($LiMn_2O_4$) in the positive electrode active material was 70 : 30 for all the batteries.

Charge depth at SD activation was obtained by calculating charge capacity ratios up to SD activation with respect to the design capacity 650 mA.

*Comparison between Batteries A1, A2, A4, A5 and Comparative Batteries U1 to U3*

Table 2 clearly demonstrates that, with Batteries A1, A2, A4, and A5 of the invention, only one sample from Battery A4 caused a short circuit on overcharge at 2.0 It. In contrast, many samples of Comparative Batteries U1 to U3 caused short circuits on overcharge at 1.5 It, and all the samples caused short circuits on overcharge at 2.0 It.

In addition, Figs. 7 and 8 clearly demonstrates that in Battery of the invention A1 the SD behavior started at about 67 minutes of charging time (charge depth: 155%) and the increase in the battery temperature at the time of SD was small, while in Comparative Battery U1 the SD behavior started later than 70 minutes of charging time (charge depth :168%) and the battery temperature abruptly increased at the time of SD due to the short circuiting within the battery. To prove that this applies universally, all the batteries were studied for their charge depths at which the SD behavior starts (hereinafter also referred to as "charge depth at SD activation"). As a result, as clearly seen from Table 2, in Comparative Batteries U1 to U3, which use a mere mixture of LMO and LCO as the positive electrode active material, the SD behavior did not start until the charge depth became about 168%; in contrast, in Batteries A1, A2, A4, and A5 of the invention, in which the double-layer structure is employed for the positive electrode active material and LMO is used in the first positive electrode active material-layer, the SD behavior started at a stage wherein the charge depth is about 10% lower than that in Comparative Batteries U1 to U3.

Herein, it is believed that Batteries A1, A2, A4, and A5 of the invention exhibited improvements in the tolerance to overcharging over Comparative Batteries U1 to U5 due to (1) the effects originating from their positive electrode structures and (2) the effects originating from their separator structures.

*(1) Effects originating from positive electrode structures*

Batteries A1, A2, A4, and A5 of the invention utilizes the LMO active material for the first positive electrode active material layer (the layer directly in contact with the positive electrode current collector). The LMO active material deintercalates most of the lithium ions from the interior of the crystals during charge to 4.2 V, so almost no lithium ions can be extracted from the interior of the crystals even when overcharged beyond 4.2 V. Therefore, the resistance increase on overcharge becomes significantly large. When the resistance increase on overcharge of the first positive electrode active material layer is very large in this way, the current collection performance lowers in the second positive electrode active material layer, which is made of the LCO active material. Consequently, the LCO active material in the second positive electrode active material layer is inhibited from being charged to the charge depth that is to be charged originally. Accordingly, the amount of lithium deintercalated from the positive electrode in the overcharge region (especially the amount of lithium deintercalated from LCO) reduces, causing the total amount of lithium deposited on the negative electrode to reduce. Consequently, the amount of heat produced due to the reaction between the electrolyte solution and the lithium deposited on the negative electrode reduces. Moreover, since the thermal stability of the positive electrode active material (particularly of LCO that becomes instable because of the extraction of lithium from the crystals) is also kept relatively high because the charge depth does not become deep.

More details are as follows. LCO deintercalates only about 60% of the lithium ions from the interior of the crystals when charged to 4.2 V and the remaining about 40% of the lithium ions can be extracted from the interior of the crystals when it is overcharged. The remaining portion of the lithium ions is not inserted into the negative electrode but is deposited on the negative electrode surface. In particular, when high-rate charging is conducted, the lithium-ion accepting capability reduces in the negative electrode, resulting in a further increase in the deposited lithium. Moreover, since tetravalent cobalt cannot exist stably, $CoO_2$ is unable to exist in a stable state, and it releases oxygen from the interior of the crystals on overcharge so that it changes into a more stable crystal form. At this stage the presence of electrolyte solution tends to cause a violent exothermic reaction, which becomes a cause of thermal runaway. Furthermore, the oxygen released from the positive electrode assists the inflammable gas produced by the decomposition of the electrolyte solution to catch fire more easily.

In view of this, the use of the LMO active material, which results in a significant resistance increase on overcharge, for the first positive electrode active material layer as with Battery A1 etc. of the invention can lower the current collection performance of the second positive electrode active material layer made of the LCO active material, inhibiting the LCO active material from being charged easily, and thereby the amount of lithium that is deintercalated from LCO decreases in the overcharge region. As a result, the total amount of lithium deposited on the negative electrode decreases, and the amount of heat produced due to the reaction between the electrolyte solution and the lithium deposited on the negative electrode accordingly decreases. Moreover, the thermal stability of LCO is also kept relatively high since the charge depth does not become deeper, leading to a decrease in the amount of oxygen generated. Thus, the safety of the battery on overcharge improves due to the mechanism discussed above.

*(2) Effects originating from separator structure*

In the overcharge region, an electrode reaction tends to occur unevenly because of uneven distribution of the electrolyte retention within the electrodes, which is due to the gas generation by side reactions and the decomposition of electrolyte solution, and especially in the location where the reaction occurs unevenly, an abnormal temperature increase tends to occur due to an increase in the amount of deposited lithium or the gathering of current, resulting in a local exothermic reaction within the battery. Because of the properties of polyethylene, the microporous polyethylene film commonly used for the separator melts at about 165°C and is therefore not effective for the local exothermic reaction within the battery, easily causing separator meltdown.

In contrast, when an electron beam cross-linked separator or a heat-proof layer-stacked separator is used as a separator, the separator does not melt down easily even if a local exothermic reaction occurs within the battery, because the melting temperatures of those separators are higher than that of the commonly-used microporous polyethylene film. Thus, using the separators with the above-described constructions enables a dramatic improvement in tolerance of the batteries to overcharging owing to the synergistic effect with the double-layer positive electrodes in which the active material of the first positive electrode active material layer (the layer directly in contact with the positive electrode current collector) uses the LMO active material. This is clear from the fact that Batteries A1, A2, A4, and A5 of the invention caused very few short circuits at a current of 1.5 It or higher.

Nevertheless, even with the use of these separators, no significant differences were observed if the positive electrode did not employ the above-described structure. This is clear from the fact that the tolerance to overcharging of Comparative Batteries U1 and U2 were not so different from that of Comparative Battery U3. It is believed that these results are attributed to the differences in the amounts of overall heat generated from the batteries. Specifically, the separator is in contact with both the positive electrode surface and the negative electrode surface; this means that the separator is affected particularly easily in the overcharge test, in which an exothermic reaction tends to take place at the surfaces. It is believed that when the total amount of heat generated is great, other short circuit modes may also occur, in which even a small amount of deposited lithium causes dendrite short circuits, since heat shrinkage of the separator or degradation in the separator strength by the overheating become more problematic. In particular, in the positive electrode construction according to the present invention, the surface is composed of LCO, which deintercalates lithium ions during overcharge most easily, and therefore, dendrite tends to deposit easily on the negative electrode. Consequently, the separator breakage occurs due to degradation in piercing strength, etc., of the separator under heated conditions, not the separator meltdown due to heat. It should be noted that this kind of separator breakage tends to occur more easily at high temperatures because the strength of separator degrades as the temperature at heating becomes higher.

Consequently, it is believed that although effective in preventing the film breakage due to local heating, changing the design of the separator alone is not so effective in preventing the piercing film breakage due to deposited lithium. Thus, such high occurrence rates of short circuits resulted.

*(3) Conclusion*

As described above, the total amount of the heat generated overall from a battery can be lowered and the lithium depositing prevented owing to the effects originating from the positive electrode structures, and also the separator meltdown temperature can be raised owing to the effects originating from the separator structures. The synergistic effect of these effects results in a dramatic improvement in the tolerance of the battery to overcharging.

*Comparison between Batteries A3, A6 and Comparative Batteries U1 to U3*

As clearly seen from Table 2, Batteries A3 and A6 of the invention, which used ordinary separators as their separators, showed similar numbers of occurrence of short circuits to, or only small improvements over, those of Comparative Batteries U1 to U3. Nevertheless, regarding the charge depths at SD activation, while the SD behavior did not start until the charge depth became about 168% in Comparative Batteries U1 to U3, which were provided with the positive electrodes containing a mere mixture of LMO and LCO as the positive electrode active material, the SD behavior started at a stage where the charge depth is about 10% lower than those in Comparative Batteries in Batteries A3 and A6 of the invention, which used the positive electrodes with a double-layer structure and the LMO active material for the first positive electrode active material layer (the layer directly in contact with the positive electrode current collector).

These results are attributed to the following reason. Since Batteries A3 and A6 of the invention employ the double-layer positive electrode active material and use LMO for the first positive electrode active material layer, they can exhibit the same advantageous effects as those of Batteries A1, A2, A4, and A5 of the invention concerning (1) the effects originating from positive electrode structure, explained in the previous discussion under the heading "*Comparison between Batteries A1, A2, A4, A5 and Comparative Batteries U1 to U3* ". However, Batteries A3 and A6 of the invention use ordinary separators as their separators and therefore they cannot exhibit the same advantageous effects as those of Batteries A1, A2, A4, and A5 of the invention concerning (2) the effects originating from separator structure, explained in the previous discussion under the heading *"Comparison between Batteries A1, A2, A4, A5 and Comparative Batteries U1 to U3 "*.

*Additional remarks on differences between electron beam cross-linked separator and heat-proof layer-stacked separator*

Although both the electron beam cross-linked separator and the heat-proof layer-stacked separator result in similar advantageous effects in terms of improvement in meltdown temperature, the former has a problem of heat shrinkage at a certain temperature since it inherits the characteristics of a PE microporous film expect for the meltdown temperature. On the other hand, the latter prevents heat shrinkage dramatically and has great resistance to short circuits originating from heat shrinkage. Nevertheless, in the above-described tests, little difference originating from the in the physical property differences between the separators was observed between the Batteries A1 and A4 of the invention, which utilized electron beam cross-linked separators, and the Batteries A2 and A5 of the invention, which utilized heat-proof layer-stacked separators. This indicates that the meltdown of separator due to local heating is a greater factor than the heat shrinkage of separator due to overall heating in the causes of the battery short circuits on overcharge.

It should be noted, however, that it is possible that the shrinkage of separator may affect the differences in internal short circuits of the batteries when the batteries are overcharged at a current value that exceeds those in the above-described experiment, in which case the amount of heat produced in the overall battery also increases.

Although not directly related to the present invention, the advantages of the heat-proof layer-stacked separator will be mentioned additionally.

As mentioned above, the SD temperature in ordinary separators (PE separators) are set at 140°C. This is because, since it is necessary to prevent internal short circuits due to heat shrinkage, the proportion of the fuse component (low-melting point component) for lowering the SD temperature needs to be restricted below a predetermined value. In other words, if the amount of the fuse component (low-melting point component) is made large, the SD behavior starts at an early stage, enabling the cut-off of current in a state in which the charge depth is shallow. However, heat shrinkage is greater even at relatively low temperatures, leading to short circuits due to the heat shrinkage.

In contrast, the heat-proof layer-stacked separator as used in Batteries A2 and A5 of the invention can prevent heat shrinkage because of the layer other than that containing the fuse component and can, therefore, increase the proportion of the fuse component, making it possible to prevent internal short circuits due to the heat shrinkage of the separator and to lower the SD temperature (for example, to 120°C or lower) at the same time. Therefore, it is believed that employing such a construction can improve the tolerance of the batteries to overcharging even with Comparative Batteries U1 to U3, which do not have a similar configuration to the batteries of the invention.

Second Embodiment

Examples B1 and B2

Batteries were fabricated in the same manners as in Example A1 and Example A3 of the First Embodiment, except that the mass ratio of LCO and LMO in the positive electrode active material was 85 : 15.

The batteries thus fabricated are hereinafter referred to as Batteries B1 and B2 of the invention, respectively.

Comparative Examples V1 and V2

Batteries were fabricated in the same manners as in Comparative Example U1 and Comparative Example U3 of the First Embodiment, except that the mass ratio of LCO and LMO in the positive electrode active material was 85 : 15.

The batteries thus fabricated are hereinafter referred to as Comparative Batteries V1 and V2, respectively.

Experiment

Batteries B1 and B2 of the invention as well as Comparative Batteries V1 and V2 were studied for the tolerance to overcharging. The results are shown in Table 3. The conditions in the experiment were the same as those in the experiment of the foregoing First Embodiment, except that the overcharge currents were 0.8 It, 1.0 It, and 1.5 It.

## TABLE 3

| Battery | Positive electrode structure | Positive electrode active material | | Separator | Number of batteries with short circuit Charge depth at SD activation (%) | | |
| --- | --- | --- | --- | --- | --- | --- | --- |
| | | Second positive electrode active material layer (Surface side) | First positive electrode active material layer (Current collector side) | | 0.8It overcharge | 1.0It overcharge | 1.5It overcharge |
| Battery B1 | Double layer | LCO | LMO | Electron beam cross-linked separator | No 152% | No 154% | No 151% |
| Battery B2 | Double layer | LCO | LMO | Ordinary separator | No 151% | 3/3 153% | 3/3 150% |
| Comparative Battery V1 | Single layer | LMO/LCO mixture | | Electron beam cross-linked separator | No 179% | 2/3 177% | 3/3 178% |
| Comparative Battery V2 | Single layer | LMO/LCO mixture | | Ordinary separator | No 177% | 3/3 176% | 3/3 173% |

The mass ratio of LCO ($LiCoO_2$) and LMO ($LiMn_2O_4$) in the positive electrode active material was 85 : 15 for all the batteries.

Charge depth at SD activation was obtained by calculating charge capacity ratios up to SD activation with respect to the design capacity 650 mA.

EP 1 619 733 A1

Table 3 clearly demonstrates that no short circuit was observed at any current values and the SD behavior started at a charge depth of about 152% in Battery B1 of the invention, which used the electron-beam cross-linked separator as its separator, a double-layer positive electrode, and the LMO active material as the first positive electrode active material layer. In contrast, with Comparative Batteries V1 and V2, which are furnished with a positive electrode of a mere mixture of LCO and LMO (single layer structure), many of the samples caused short circuits on overcharge at 1.0 It and all the samples caused short circuits on overcharge at 1.5 It. Moreover, the SD behavior did not start until the charge depth reached about 175%.

Although Battery B2 of the invention, which only differed from Battery B1 of the invention in the respect that the separator was an ordinary separator, showed a similar number of occurrence of short circuits to those of Comparative Batteries V1 and V2, its charge depth at SD activation reduced 20% or greater in comparison with those of Comparative Batteries V1 and V2.

It is believed that these experimental results are due to the same reasons as discussed in the experiment in the First Embodiment above.

Third Embodiment

Examples C1 and C2

Batteries were fabricated in the same manners as in Example A1 and Example A3 of the First Embodiment except that the mass ratio of LCO and LMO was 50 : 50 in the positive electrode active material.

The batteries thus fabricated are hereinafter referred to as Batteries C1 and C2 of the invention, respectively.

Comparative Examples W1 and W2

Batteries were fabricated in the same manners as in Comparative Example U1 and Comparative Example U3 of the First Embodiment except that the mass ratio of LCO and LMO was 50 : 50 in the positive electrode active material.

The batteries thus fabricated are hereinafter referred to as Comparative Batteries W1 and W2, respectively.

Experiment

Batteries C1 and C2 of the invention as well as Comparative Batteries W1 and W2 were studied for the tolerance to overcharging. The results are shown in Table 4. The conditions in the experiment were the same as those in the experiment of the foregoing First Embodiment, except that the overcharge currents were 2.0 It, 2.5 It, and 3.0 It.

TABLE 4

| Battery | Positive electrode structure | Positive electrode active material | | Separator | Number of batteries with short circuit Charge depth at SD activation (%) | | |
|---|---|---|---|---|---|---|---|
| | | Second positive electrode active material layer (Surface side) | First positive electrode active material layer (Current collector side) | | 2.0It overcharge | 2.5It overcharge | 3.0It overcharge |
| Battery C1 | Double layer | LCO | LMO | Electron beam cross-linked separator | No 145% | No 145% | No 143% |
| Battery C2 | Double layer | LCO | LMO | Ordinary separator | No 145% | 2/3 144% | 3/3 144% |
| Comparative Battery W1 | Single layer | LMO/LCO mixture | | Electron beam cross-linked separator | No 157% | 2/3 156% | 3/3 155% |
| Comparative Battery W2 | Single layer | LMO/LCO mixture | | Ordinary separator | No 156% | 3/3 154% | 3/3 154% |

The mass ratio of LCO ($LiCoO_2$) and LMO ($LiMn_2O_4$) in the positive electrode active material was 50 : 50 for all the batteries.

Charge depth at SD activation was obtained by calculating charge capacity ratios up to SD activation with respect to the design capacity 650 mA.

Table 4 clearly demonstrates that no short circuit was observed at any current values and the SD behavior started at a charge depth of about 152% in Battery C1 of the invention, which used an electron-beam cross-linked separator as its separator, a double-layer positive electrode, and the LMO active material as the first positive electrode active material layer. In contrast, with Comparative Batteries W1 and W2, each of which uses an electron-beam cross-linked separator and a positive electrode of a mere mixture of LCO and LMO (single layer structure), all the samples caused short circuits on overcharge at 2.5 It and the SD behavior did not start until the charge depth reached about 175%.

Although Battery C2 of the invention, which only differed from Battery C1 of the invention in the respect that the separator was an ordinary separator, showed a similar number of occurrence of short circuits to those of Comparative Batteries W1 and W2, its charge depth at SD activation proved to be more than 20% lower than those of Comparative Batteries W1 and W2.

It is believed that these experimental results are due to the same reasons as discussed in the experiment in the First Embodiment above.

Fourth Embodiment

Examples D1 to D3

Batteries were fabricated in the same manners as in Examples A1 to A3 of the First Embodiment except that an olivine-type lithium phosphate compound represented by the formula $LiFePO_4$ (hereinafter also referred to as LFP) was used for the first positive electrode active material layer (the current collector-side layer of the positive electrode active material layers) in place of LMO, and that the mass ratio of LCO and LFP within the positive electrode active material was 75 : 25. The olivine-type lithium phosphate compound has poor conductivity and shows inferior load characteristics. For that reason, 5% carbon component was contained in the secondary particles of the olivine-type lithium phosphate compound a the baking stage of the positive electrode active material to provide a conductive path by the carbon within the secondary particles for the purpose of ensuring sufficient battery performance. The above-described batteries had a design capacity of 780 mAh.

The batteries thus fabricated are hereinafter referred to as Batteries D1 to D3 of the invention, respectively.

Example D4

A battery was fabricated in the same manner as in Example A6 of the First Embodiment except that LFP was used as the positive electrode active material in the first positive electrode active material layer (the current collector-side layer of the positive electrode active material layers) in place of LMO, that a mixture of LCO and LFP was used as the positive electrode active material in the second positive electrode active material layer (the surface-side layer of the positive electrode active material) in place of the mixture of LCO and LMO, and that the mass ratio of LCO and LFP within the positive electrode active material was 75 : 25.

The batteries thus fabricated are hereinafter referred to as Batteries D4 of the invention.

Comparative Examples X1 to X3

Batteries were fabricated in the same manners as in the foregoing Examples A 1 to A3 except that a single layer structure was adopted for the positive electrode active material-layer, instead of the double layer structure (a mixture of LCO and LFP was used as the positive electrode active materials).

The batteries thus fabricated are hereinafter referred to as Comparative Batteries X1 to X3, respectively.

Experiment

Batteries D1 to D4 of the invention and Comparative Batteries X1 to X3 were studied for the tolerance to overcharging. The results are shown in Table 5. The conditions of the experiment were identical to those in the First Embodiment above except that the currents for the overcharging were 1.0 It, 2.0 It, 3.0 It, and 4.0 It, with 1.0 It being defined as 750 mA). In the present experiment, highest battery surface temperatures reached (°C) were measured with many samples of the batteries, in addition to numbers of occurrences of short circuits and charge depths (%) at SD activation.

TABLE 5

| Battery | Positive electrode structure | Positive electrode active material | | Separator | Number of batteries with short circuit Charge depth at SD activation (%), Highest batter surface temperature (°C) | | | |
|---|---|---|---|---|---|---|---|---|
| | | Second positive electrode active material layer (Surface side) | First positive electrode active material layer (Current collector side) | | 1.0It overcharge | 2.0It overcharge | 3.0It overcharge | 4.0It overcharge |
| Battery D1 | Double layer | LCO | LFP | Electron beam cross-linked separator | No 153%, 86°C | No 152%, 91°C | No 147%, 89°C | 1/3 159%, 113°C |
| Battery D2 | Double layer | LCO | LFP | Heat-proof-layer stacked separator | No 152%, 87°C | No 151%, 88°C | No 148%, 87°C | No 158%, 121°C |
| Battery D3 | Double layer | LCO | LFP | Ordinary separator | No 151%, 87°C | No 151%, 85°C | No 149%, 93°C | 2/2 157% |
| Battery D4 | Double layer | LCO/LFP mixture | LFP | Ordinary separator | No 150%, 91°C | No 150%, 90°C | No 150%, 95°C | 2/2 158% |
| Comparative Battery X1 | Single layer | LCO/LFP mixture | | Electron beam cross-linked separator | No 161%, 116°C | 1/2 160%, 128°C | 2/2 159% | – |
| Comparative Battery X2 | Single layer | LCO/LFP mixture | | Heat-proof-layer stacked separator | No 160%, 123°C | 1/2 159%, 126°C | 2/2 160% | – |
| Comparative Battery X3 | Single layer | LCO/LFP mixture | | Ordinary separator | No 160%, 121°C | 2/2 158% | 2/2 159% | – |

The mass ratio of LCO ($LiCoO_2$) and LFP ($LiFePO_4$) in the positive electrode active material was 75 : 25 for all the batteries.

Charge depth at SD activation was obtained by calculating charge capacity ratios up to SD activation with respect to the design capacity 780 mA.

Battery surface temperature was not measured in some samples.

EP 1 619 733 A1

Table 5 clearly demonstrates that no short circuit was observed to a current value of 3.0 It and the SD behavior started at a charge depth of about 150% in Batteries D1 to D4 of the invention, which employed a double-layer positive electrode and the LFP active material as the first positive electrode active material layer. In contrast, with Comparative Batteries X1 to X3, which are furnished with a positive electrode of a mere mixture of LCO and LFP (single layer structure), all the samples caused short circuits on overcharge at 2.0 It or higher, and the SD behavior did not start until the charge depth reached about 160%.

Thus, Batteries D1 to D4 of the invention proved to be superior in the tolerance to overcharging to Comparative Batteries X1 to X3, and this is due to the same reason as discussed in the Experiment in the First Embodiment.

What is characteristic in the Fourth Embodiment is that the SD function of the separators was not activated in the overcharge tests at 3.0 It or less, in not only Batteries D1 and D2 of the invention, which respectively adopted an electron beam cross-linked separator and a heat-proof layer-stacked separator, but also in Batteries D3 and D4 of the invention, which used ordinary separators.

It is beloved that the reason is as follows. As clearly seen from Table 5, in the overcharge tests at 3.0 It or below, the highest battery surface temperatures reached (note that the temperatures in the interior of the batteries are believed to be about 20°C to 30°C higher than the battery surface temperatures) were less than 100°C in all the samples of Batteries D3 and D4 of the invention, while the highest battery surface temperatures reached in all the samples of Comparative Batteries X1 to 3 were 100°C or higher. This suggests that in Batteries D3 and D4 of the invention, the heat produced in the batteries was not great until they reached a temperature at which PE melts and their battery voltage increased solely due to the resistance increase in the electrodes. Actually, the air permeabilities of the separators in Batteries D3 and D4 of the invention that were used for the overcharge tests at 3.0 It or below, measured according to the measurement method described blow, were found to be 175 sec/100 mL both before and after the overcharge tests, which confirms that their air permeability did not change. This indicates that the separator shutdown due to the meltdown of PE did not take place in the separators of Batteries D3 and D4 of the invention.

- Measurement of Separator Air Permeability

This measurement was carried out according to JIS P8117, and the equipment used for the measurement was a B-type Gurley densometer (made by Toyo Seiki Seisaku-sho, Ltd.).

Specifically, a separator was fastened to a circular hole (diameter: 28.6 mm, area: 645 mm$^2$) of an inner cylinder (mass: 567 g), and the air in the cylinder was passed through the test cylinder's circular hole to the outside of the tube. The time it takes for 100 mL of air in the outer cylinder to pass through the separator was measured, and the measured value was employed as the air permeability of the separator.

Although in the overcharging at a current value of 4.0 It or higher, all the samples of Batteries D3 and D4 of the invention, which used ordinary separators, caused short circuits because of the way the overvoltage applies, the imbalance of heat produced, and the like, almost no samples of Batteries D1 and D2 of the invention, which respectively used an electron beam cross-linked separator and a heat-proof layer-stacked separator, did not cause short circuits. Thus, it will be appreciated that the batteries using an electron beam cross-linked separator or a heat-proof layer-stacked separator can contribute to the improvement in the tolerance to overcharging because they can exhibit the shutdown function of the separator effectively and such an effect as reducing the amount of deposited lithium, although the battery temperature may rise.

Moreover, the construction of the present embodiment is suitable not only for batteries that employ a battery case made of stainless steel or the like but also for batteries that employ a flexible battery case, such as laminate batteries. The reason is as follows.

Generally, when a battery is overcharged, the battery surface temperature exceeds 100°C (120°C or higher in the battery interior) in most cases, (cf. the experiment results for Comparative Batteries X1 to X3), and gas is generated because of the evaporation and decomposition the electrolyte solution within the battery even when no short circuit occurs. Moreover, because of the deeper shutdown depth on overcharge, the battery employing a flexible battery case such as a laminate battery in particular has a problem that the battery swells due to the gas generated, resulting in a non-uniform reaction within the battery and the short circuits originating therefrom.

In contrast, with Batteries D1 to D4 of the invention, the battery surface temperature does not exceed 100°C even when they are overcharged and the shutdown depth on overcharge is also shallow; therefore, the evaporation and decomposition of the electrolyte solution within the batteries are inhibited, and the gas generated inside is also reduced. Furthermore, while the previous First to Third Embodiments employ LMO as the active material in the first positive electrode active material layer, the Fourth Embodiment utilizes LFP as the active material in the first positive electrode active material layer and therefore the oxidation action in the electrode lowers during overcharge.

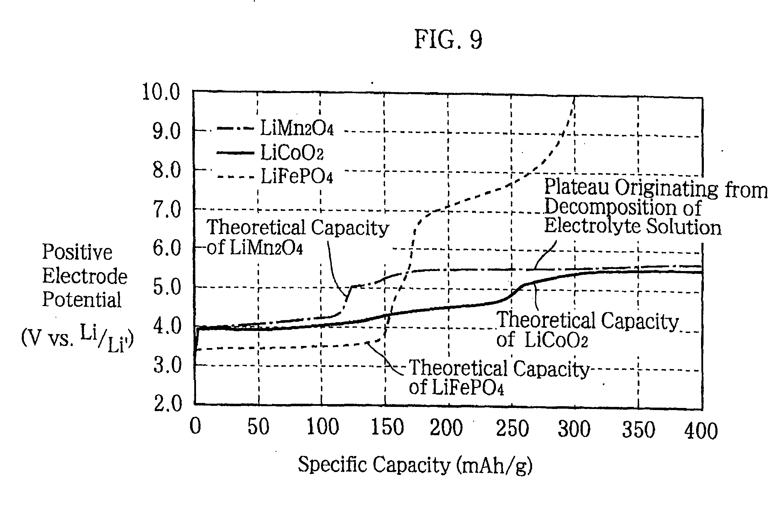

Here, the reason why the use of LFP as the active material in the first positive electrode active material layer can lower the oxidation action in the electrode on overcharge will be discussed with reference to Fig. 9. Fig. 9 shows the continuous charge profiles of the positive electrodes respectively using LCO, LMO, and LFP alone, measured according to the following method of the experiment.

- Method of the Experiment

The positive electrodes (2 cm × 2 cm) using the LCO, LMO, and LFP active materials were applied onto aluminum foils in the manner previously described, and the prepared positive electrodes were opposed to the counter electrodes of metallic lithium with separators interposed therebetween to construct single electrodes. The potentials of the respective active materials were measured versus the potential of reference lithium metal electrode to compare the profiles of the active materials during charge. The electrolyte solution used was a mixed solvent of 3 : 7 volume ratio of EC and DEC in which LiPF$_6$ was dissolved at a concentration of 1.0 mol/L. The batteries were charged at a constant current of 0.25 mA/cm$^2$, which was cut off at 10 V.

The graph clearly demonstrates that LFO was the least in terms of the charged positive electrode's capability of decomposing the electrolyte solution when lithium ions had been extracted from the crystals, and the decomposition of the electrolyte solution was very little in comparison with LMO and LCO, which showed strong oxidation action. It is believed that the plateau around 5.6 V in the graph suggests that the electrolyte solution made of EC and DEC underwent electrolysis on the positive electrode. Specifically, in the cases in which LMO and LCO were used as the positive electrode active material, the plateaus were observed even after lithium was completely extracted from the crystals, which suggested that the electrolyte solution was being decomposed. On the other hand, in the case in which LFP was used as the positive electrode active material, a relatively quick voltage increase resulted and almost no plateau originating from the decomposition of the electrolyte solution was observed, suggesting that the oxidation action of the electrode was low.

It will be appreciated from the above discussion that the use of LFP as the active material in the first positive electrode active material layer for a battery using a flexible battery case, such as a laminate battery, can prevent non-uniform reactions within the battery and short circuits originating therefrom because the battery swelling due to the generation of gas is inhibited sufficiently, although temporary swelling may occasionally be observed due to the evaporation of the low-boiling point solvent component. In this respect, the battery according to the Fourth Embodiment can improve its performance over the batteries according to the First to the Third Embodiments, which use LMO as the active material in the first positive electrode active material layer.

Fifth Embodiment

Example E

A battery was fabricated in the same manner as in Example D3 of the Fourth Embodiment, except that the mass ratio of LCO and LFP in the positive electrode active material was 80 : 20.

The battery thus fabricated is hereinafter referred to as Battery E of the invention.

Comparative Example Y

A battery was fabricated in the same manner as in Comparative Example X3 of the Fourth Embodiment, except that the mass ratio of LCO and LFP in the positive electrode active material was 80 : 20.

The battery thus fabricated is hereinafter referred to as Comparative Battery Y of the invention.

Experiment

Battery E of the invention and Comparative Battery E were studied for the tolerance to overcharging. The results are shown in Table 6. The conditions of the experiment were the same as those in the experiment of the Fourth Embodiment above.

TABLE 6

| Battery | Positive electrode structure | Positive electrode active material | | Separator | Number of batteries with short circuit Charge depth at SD activation (%), Highest batter surface temperature (°C) | | | |
|---|---|---|---|---|---|---|---|---|
| | | Second positive electrode active material layer (Surface side) | First positive electrode active material layer (Current collector side) | | 1.0It overcharge | 2.0It overcharge | 3.0It overcharge | 4.0It overcharge |
| Battery E | Double layer | LCO | LFP | Ordinary separator | No 154%, 86°C | No 153%, 92°C | No 154%, 95°C | 2/2 150% |
| Comparative Battery Y | Single layer | LCO/LFP mixture | | Ordinary separator | 2/2 165% | 2/2 167% | 2/2 165% | – |

The mass ratio of LCO ($LiCoO_2$) and LFP ($LiFPO_4$) in the positive electrode active material was 80 : 20 for all the batteries.

Charge depth at SD activation was obtained by calculating charge capacity ratios up to SD activation with respect to the design capacity 780 mA.

Battery surface temperature was not measured in some samples.

Table 6 clearly demonstrates that no short circuit was observed at a current value of 3.0 It or lower and the SD behavior started at a charge depth of about 154% with Battery E of the invention, which employed a double-layer positive electrode and the LFP active material as the first positive electrode active material layer. In contrast, with Comparative Battery Y, which was furnished with a positive electrode of a mere mixture of LCO and LFP (single layer structure), all the samples caused short circuits on overcharge at any all the current values, and the SD behavior did not start until the charge depth reached about 165%.

It is believed that these experimental results are due to the same reasons as discussed in the experiment in the Fourth Embodiment above.

Sixth Embodiment

Example F

A battery was fabricated in the same manner as in Example E of the Fifth Embodiment except that LFP, SP300, and acetylene black were mixed at a mass ratio of 94.5 : 1.5 : 1 (92 : 3 : 2 in the case of Example E of the Fifth Embodiment) when preparing the positive electrode mixture powder for the LFP layer. (In other words, the amount of conductive agent added was less in the present example than in the Fifth Embodiment.)

The battery thus fabricated is hereinafter referred to as Battery F of the invention.

Comparative Example Z

A battery was fabricated in the same manner as in Comparative Example Y of the Fifth Embodiment except that LFP, SP300, and acetylene black were mixed at a mass ratio of 94.5 : 1.5 : 1 (92 : 3 : 2 in the case of Example E of the Fifth Embodiment) when preparing the positive electrode mixture powder for the LFP layer. (In other words, the amount of conductive agent added was less in the present example than in the Fifth Embodiment.)

The battery thus fabricated is hereinafter referred to as Comparative Battery Z.

Experiment

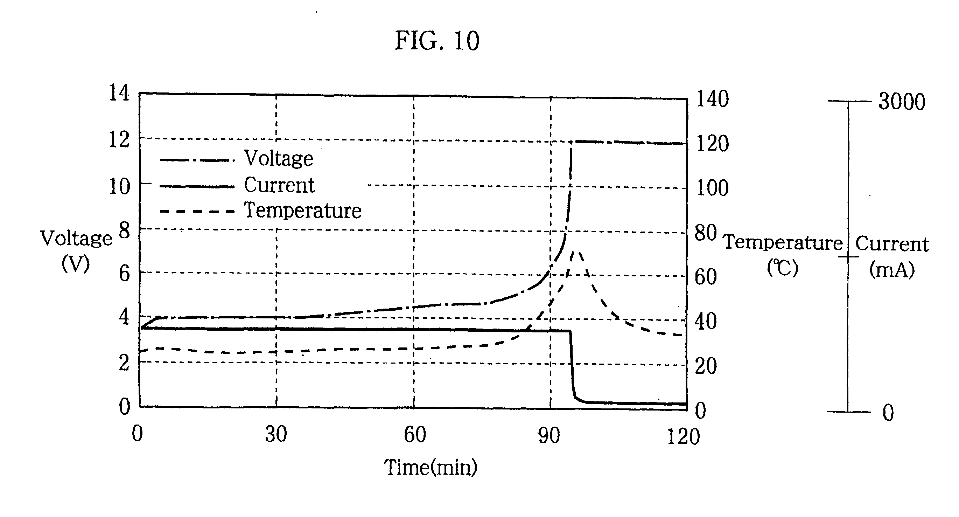

Battery F of the invention and Comparative Battery Z were studied for the tolerance to overcharging. The results are shown in Table 7. The conditions of the experiment were the same as those in the experiment of the Fourth Embodiment above. Battery F of the invention and Comparative Battery Z were studied for their profiles of charging time versus current, voltage (battery voltage), and temperature (battery surface temperature) by charging Battery F of the invention at a current of 1.0 It (750 mA) and at a current of 30 It (2250 mA), and Comparative Battery Z at a current of 1.0 It. The results are shown in Figs. 10, 11, and 12, respectively.

TABLE 7

| Battery | Positive electrode structure | Positive electrode active material | | Separator | Number of batteries with short circuit Charge depth at SD activation (%), Highest batter surface temperature (°C) | | | |
|---------|------------------------------|-----------------------------------|--|-----------|--|--|--|--|
| | | Second positive electrode active material layer (Surface side) | First positive electrode active material layer (Current collector side) | | 1.0It overcharge | 2.0It overcharge | 3.0It overcharge | 4.0It overcharge |
| Battery F | Double layer | LCO | LFP | Ordinary separator | No 152%, 72°C | No 150%, 72°C | No 149%, 83°C | No 147%, 72°C |
| Comparative Battery Z | Single layer | LCO/LFP mixture | | Ordinary separator | 3/3 162% | 3/3 160% | 3/3 163% | — |

The mass ratio of LCO ($LiCoO_2$) and LPF ($LiFePO_4$) in the positive electrode active material was 80 : 20 for all the batteries.

Charge depth at SD activation was obtained by calculating charge capacity ratios up to SD activation with respect to the design capacity 780 mA.

Battery surface temperature was not measured in some samples.

Table 7 clearly demonstrates that no short circuit was observed at any current value and the SD behavior started at a charge depth of about 150% in Battery F the invention, which employed a double-layer positive electrode and the LFP active material as the first positive electrode active material layer. In contrast, with Comparative Battery Z, which used a positive electrode of a mere mixture of LCO and LFP (single layer structure), all the samples caused short circuits at all the current values, and the SD behavior did not start until the charge depth reached about 162%.

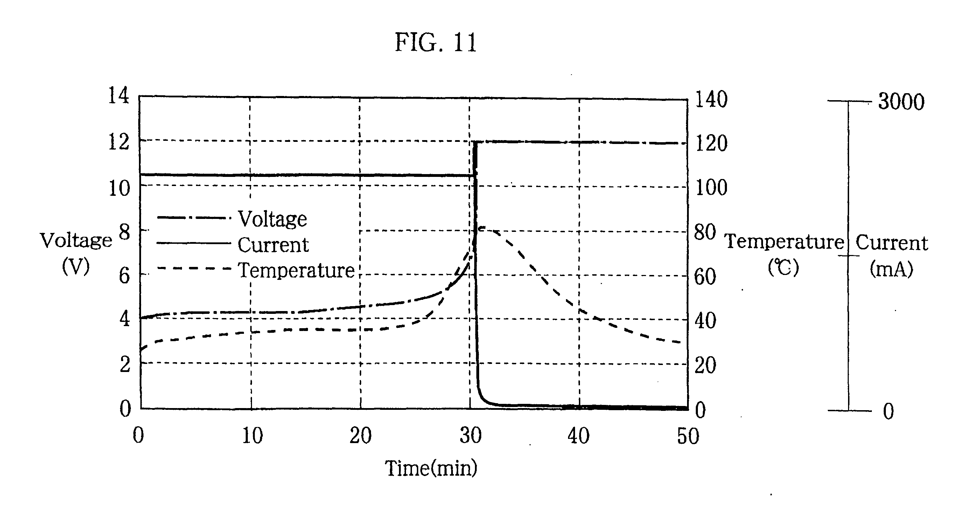

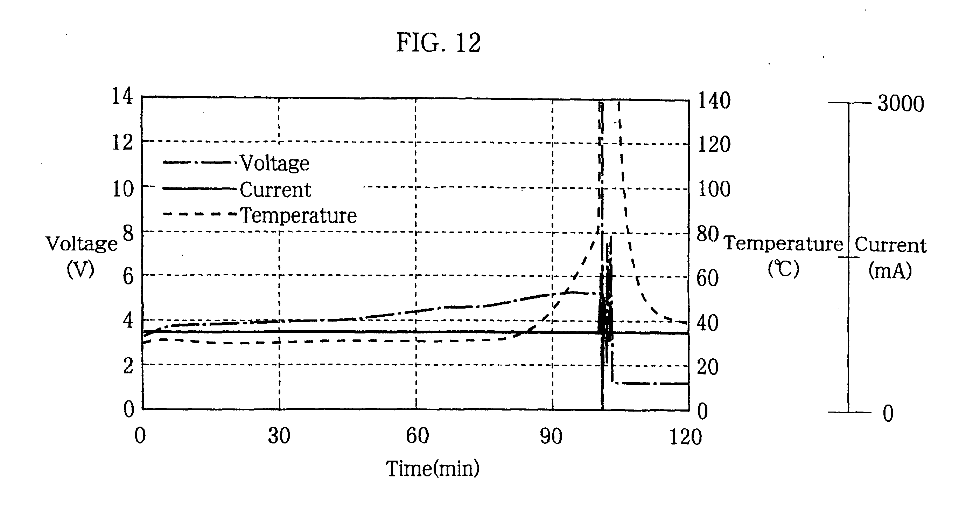

Moreover, as clearly seen from Figs. 10 and 12, when charging the batteries at a current of 1.0 It, the SD behavior started at about 95 minutes of charging time and also the battery temperature increase at SD was small in Battery of the invention F, whereas in Comparative Battery Z the SD behavior did not start until the charging time reached about 100 minutes and the battery temperature rose significantly on SD due to short circuiting in the battery. Furthermore, Fig. 11 clearly demonstrates that even when overcharged at a current of 3.0 It, the SD behavior started at about 31 minutes of charging time and the battery temperature increase at SD was small in Battery F of the invention.

It is believed that these experimental results are attributed to the same reasons as discussed in the experiment in the Fourth Embodiment above.

In addition, although both Battery E according to the Fifth Embodiment and Battery F according to the present embodiment of the invention have the same mass ratio of LCO and LFP, the samples of Battery E of the invention caused short circuits on overcharge at a current of 4.0 It while no samples of Battery F of the invention caused short circuits even at a current of 4.0 It. Thus, by reducing the amount of conductive agent in the LFP layer, the tolerance of the battery to overcharging can be improved further. The reason is as follows.

The advantageous effects according to the present invention are exhibited when the positive electrode active material having the highest resistance increase rate during overcharging (LFP in the present embodiment) is contained as the main component in the first positive electrode active material. However, when a large amount of the carbon conductive agent, which is a conductive agent, is contained in the LFP layer as in Battery E of the invention, the resistance increase effect originating from the LFP layer may be lowered because of the presence of the carbon conductive agent. In contrast, when the amount of the carbon conductive agent contained in the LFP layer is reduced as in Battery F of the invention, the resistance increase effect during overcharging that originates from the LFP layer is maximized.

Nevertheless, reducing the amount of conductive agent can impede smooth charge and discharge operations during normal charge-discharge reactions. Therefore, in order to attain smooth normal charge-discharge reactions even with a small amount of conductive agent and at the same time improve the tolerance of the battery to overcharging remarkably, it is desirable that the thickness of the LFP layer be as thin as possible.

Other Variations

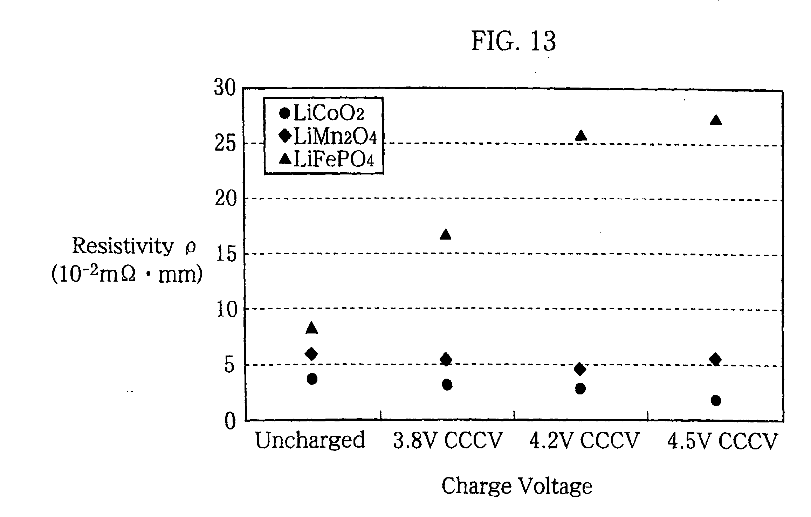

(1) The lithium cobalt oxide, the spinel-type lithium manganese oxide, and the olivine-type lithium iron phosphate were studied for resistivity changes at various charge voltages. The results are shown in Table 8 and Fig. 13. The experiment was conducted in the following manner.

*Details of the Experiment*

Using the lithium cobalt oxide, the spinel-type lithium manganese oxide, and the olivine-type lithium iron phosphate, batteries were fabricated in the same manner as in the working example described previously.

The samples of the batteries thus fabricated were either not charged or charged at a constant current to 3.8 V, 4.2 V, and 4.5 V and then at a constant voltage.

- Condition of the constant-current constant-voltage charge

The batteries were charged at a constant current of 650 mA to the predetermined voltages and then discharged at a constant voltage until the charge current reached 1 mA.

Next, each of the batteries was disassembled and the positive electrode was taken out, followed by washing with DEC (diethyl carbonate) and drying. Thereafter, the positive electrodes charged to the above-noted voltages were cut out into a size of 2 cm × 2 cm and pressed with a press jig of copper having a squared shape (2.1 cm × 2.1 cm) at a pressure of 60 kN, and the direct current resistances at 1 kHz were measured using 3560 AC m-Ohm HiTESTER (made by Hioki E.E. Corp.).

Subsequently, the electrode thicknesses after the pressing were measured, and using the following equation (1), the resistivities of the active material layers were calculated.

$$\text{Resistivity } \rho \text{ (m}\Omega\text{•mm)} = \text{direct current resistance (m}\Omega\text{)} \times \text{measurement sample}$$

$$\text{area (mm}^2\text{)/electrode thickness (mm)} \qquad\qquad (1)$$

TABLE 8

| Condition | Lithium cobalt oxide ($10^{-2}$ M$\Omega$•mm) | Spinel-type lithium Olivine-type manganese oxide ($10^{-2}$ m$\Omega$•mm) | lithium iron phosphate ($10^{-2}$ m$\Omega$•mm) |
|---|---|---|---|
| Not charged | 3.68 | 5.85 | 8.42 |
| 3.8 V CCCV | 3.10 | 5.30 | 16.90 |
| 4.2 V CCCV | 2.61 | 4.49 | 25.64 |
| 4.5 V CCCV | 1.45 | 5.35 | 26.95 |

*Results of the experiment*

Table 8 and Fig. 13 clearly demonstrate that the resistance in the positive electrode using lithium cobalt oxide tends to decrease as the charge depth increases while the resistance in the electrode using the olivine-type lithium iron phosphate tends to increase owing to the decrease in the amount of lithium within the positive electrode active material.

Specifically, the resistance increase rate of the olivine-type lithium iron phosphate shows a very large increase from about 3.8 V, indicating that the olivine-type lithium iron phosphate is effective in the improvement in the tolerance of the battery to overcharging. It is inferred that this results from the electrochemical behavior of the olivine-type lithium iron phosphate (olivine-type lithium phosphate compound), that is, the resistance greatly increases as lithium is extracted from the interior of the active material. Therefore, the olivine-type lithium iron phosphate (olivine-type lithium phosphate compound) is suitable for the positive electrode active material in the first positive electrode active material layer.

On the other hand, the resistance increase rate of the spinel-type lithium manganese oxide did not change greatly, judging from what is shown in Table 8 and Fig. 13. However, the foregoing results of the experiment were obtained because only the resistance for direct current component was measured in the foregoing experiment. If the resistance in the chemical components is also taken into account, the resistance increase rate takes a positive value even in the case of the spinel-type lithium manganese oxide. This will be appreciated from Fig. 9 used in the Experiment in the Fourth Embodiment above. Specifically, Fig. 9 clearly demonstrates that the positive electrode potential of the spinel-type lithium manganese oxide shows a sharp increase from about 4.2 V to about 5.0 V at about a specific capacity of 120 mAh/g.

The spinel-type lithium manganese oxide, however, shows a smaller resistance increase rate than the olivine-type lithium iron phosphate. Therefore, when the spinel-type lithium manganese oxide is used as the positive electrode active material in the first positive electrode active material layer within the positive electrode having a multi-layer structure according to the present invention, its advantageous effect on the improvement in the tolerance of a battery to overcharging will be less than when the olive-type lithium iron phosphate is used as the positive electrode active material in the first positive electrode active material layer. It is thought that the reason is due to its electrochemically behavior. That is, the spinel-type lithium manganese oxide has oxygen defects within the spinel structure, and electrons flow through the defects, which serve as a conductive path, whereby the resistance increase as the positive electrode active material is somewhat reduced.

It should be noted that the characteristics of spinel-type lithium manganese oxide may vary depending on the production lots. Therefore, it is possible that use of a spinel-type lithium manganese oxide from a different production lot may result in a large resistance increase rate even when only the resistance with direct current component is measured as described above.

(2) The positive electrode active material is not limited to lithium cobalt oxide, the spinel-type lithium manganese oxide, and the olivine-type lithium phosphate compound. Other materials may be used such as lithium nickel oxide and a layered lithium-nickel compound. Table 9 shows the resistance increase rates on overcharge, the amounts of lithium extracted due to overcharge, and the amounts of remaining lithium in a charged state to 4.2 V of the positive electrode active materials made of these substances. Herein, it is necessary that the positive electrode active materials showing large resistance increase rates on overcharge in Table 9 be selected for the first positive electrode active material layer (the layer near the positive electrode current collector).

TABLE 9

| Type of positive electrode active material | Resistance increase during overcharge (4.2 V reference) | Amount of lithium that can be extracted in overcharging (4.2 V reference) | Amount of remaining lithium in 4.2 V charged state (%) |
|---|---|---|---|
| Lithium cobalt oxide ($LiCoO_2$) | Small (Slow) | Very large | 40 |
| Spinel-type lithium manganese oxide ($LiMn_2O_4$) | Large (Fast) | Small | Little |
| Lithium nickel oxide ($LiNiO_2$) | Fair | Large | 20 - 30 |
| Olivine-type lithium ion phosphate ($LiFePO_4$) | Very large (Very fast) | Small | Little |
| Layered lithium-nickel compound ($LiNi_{1/3}Mn_{1/3}Co_{1/3}O_2$) | Fair | Large | 20 - 30 |

The olivine-type lithium phosphate compound is not limited to $LiFePO_4$. Specifically, the details are as follows.
The olivine-type lithium phosphate compounds represented by the general formula $LiMPO_4$ show varying working voltage ranges depending on the kind of the element M. Generally, it is well known that $LiFePO_4$ results in a plateau from 3.3 V to 3.5 V in a 4.2 V region, in which commercially available lithium-ion batteries are used, and it deintercalates most of the Li ions from its crystals with a charge at 4.2 V. In the case where the element M is a Ni-Mn-based mixture, the plateau emerges from 4.0 V to 4.1 V, and it deintercalates most of Li ions at a charge of 4.2 V to 4.3 V from the crystals. In order to attain the advantageous effects of the invention with currently available lithium ion batteries, it is necessary that the olivine-type lithium phosphate compound exert the advantageous effects of the invention quickly while preventing reduction in the positive electrode capacity by contributing to charging and discharging through a normal charge-discharge reaction and that it have a discharge working voltage similar to those of LCO and Li-NiMnCo compound. In that sense, it is desirable to use an olivine lithium oxide compound in which the element M contains at least one element selected from Fe, Ni, and Mn, and that has a discharge working potential of from about 3.0 V to about 4.0 V.

(3) Although the foregoing examples utilizes a spinel-type lithium manganese oxide alone or a olivine-type lithium phosphate compound alone as the active material of the first positive electrode active material layer, these constructions are merely illustrative of the invention. It is of course possible to use, for example, a mixture of a spinel-type lithium manganese oxide and an olivine-type lithium iron phosphate as the active material of the first positive electrode active material layer. Likewise, it is possible to use a mixed material for the second positive electrode active material layer.

(4) The structure of the positive electrode is not limited to the two-layer structure, and a structure comprising three or more layers may of course be employed. For example, in the case of three-layer structure, the active material having a large resistance increase may be used for the lowermost layer (the layer near the positive electrode current collector) or for the middle layer, but it is desirable that the active material having a large resistance increase be used for the lowermost layer in order to increase the tolerance to overcharging drastically.

(5) The method for causing cross-linking in the separator is not limited to the electron beam cross-linking, and it is also possible to adopt a method in which cross-linking is effected chemically. The method in which cross-linking is effected chemically can raise the meltdown temperature as well. However, the method in which cross-linking is effected chemically may change other physical properties of the separator considerably, and therefore, it is necessary that fine adjustments be made during the production. For this reason, it is desirable from the viewpoint of improving productivity that electron beam be used for the cross-linking.

(6) The source material used in preparing the heat-proof layer-stacked separator is not limited to polyamide, and other materials such as polyimide and polyamideimide may be used. The water-soluble solvent used when preparing the heat-proof layer stacked separator is not limited to N-methyl-2-pyrrolidone but other solvents such as N,N-dimethylformamide and N,N-dimethylacetamide may also be used.

(7) The method for mixing the positive electrode mixture is not limited to the above-noted mechanofusion method. Other possible methods include a method in which a mixture is dry-blended while milling the mixture with a Raikai-mortar, and a method in which the mixture is wet-mixed and dispersed directly in a slurry.

(8) The negative electrode active material is not limited to the graphite, and various other materials may be employed, such as coke, tin oxides, metallic lithium, silicon, and mixtures thereof, as long as the materials are capable of intercalating and deintercalating lithium ions.

(9) The lithium salt in the electrolyte solution is not limited to $LiPF_6$, and various other substances may be used, including $LiBF_4$, $LiN(SO_2CF_3)_2$, $LiN(SO_2C_2F_5)_2$, $LiPF_{6-x}(C_nF_{2n+1})_x$ (wherein $1 < x < 6$ and $n = 1$ or $2$), which may be used either alone or in combination of two or more of them. The concentration of the lithium salt is not particularly limited, but it is preferable that the concentration of the lithium salt be restricted in the range of from 0.8 moles to 1.5 moles per 1 liter of the electrolyte solution. The solvents for the electrolyte solution are not particularly limited to ethylene carbonate (EC) and diethyl carbonate (DEC) mentioned above, and preferable solvents include carbonate solvents such as propylene carbonate (PC), γ-butyrolactone (GBL), ethyl methyl carbonate (EMC), and dimethyl carbonate (DMC). More preferable is a combination of a cyclic carbonate and a chain carbonate.

(10) The present invention may be applied to gelled polymer batteries as well as liquid-type batteries. In this case, examples of the polymer material include polyether-based solid polymer, polycarbonate solid polymer, polyacrylonitrile-based solid polymer, oxetane-based polymer, epoxy-based polymer, and copolymers or cross-linked polymers comprising two or more of these polymers, as well as PVDF; A gelled solid electrolyte in which any of these polymer materials, a lithium salt, and an electrolyte are combined may be used.

The present invention is applicable to large-sized batteries for, for example, in-vehicle power sources for electric automobiles or hybrid automobiles, as well as driving power sources for mobile information terminals such as mobile telephones, notebook computers, and PDAs.

Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

**Claims**

1. A non-aqueous electrolyte battery comprising:

   a positive electrode including a positive electrode active material-layer and a positive electrode current collector, the positive electrode active material-layer being formed on a positive electrode current collector surface and comprising a plurality of layers respectively having different positive electrode active materials, wherein, among the plurality of layers, a layer other than the outermost positive electrode layer contains as its main active material a positive electrode active material having the highest resistance increase rate during overcharging among the positive electrode active materials;
   a negative electrode including a negative electrode active material layer; and
   a separator interposed between the electrodes.

2. The non-aqueous electrolyte battery according to claim 1, wherein the layer other than the outermost positive electrode layer is in contact with the positive electrode current collector.

3. The non-aqueous electrolyte battery according to claim 1 or 2, wherein the main active material in the positive electrode active material of the layer other than the outermost positive electrode layer comprises a spinel-type lithium manganese oxide.

4. The non-aqueous electrolyte battery according to claim 1 or 2, wherein the main active material in the positive electrode active material of the layer other than the outermost positive electrode layer consists of a spinel-type lithium manganese oxide.

5. The non-aqueous electrolyte battery according to claim 1 or 2, wherein the main active material in the positive electrode active material of the layer other than the outermost positive electrode layer comprises an olivine-type lithium phosphate compound represented by the general formula $LiMPO_4$, where M is at least one element selected from the group consisting of Fe, Ni, and Mn.

6. The non-aqueous electrolyte battery according to claim 1 or 2, wherein the main active material in the positive electrode active material of the layer other than the outermost positive electrode layer consists of an olivine-type lithium phosphate compound represented by the general formula $LiMPO_4$, where M is at least one element selected from the group consisting of Fe, Ni, and Mn.

7. The non-aqueous electrolyte battery according to any one of claims 1 through 6, wherein the positive electrode active material-layer contains lithium cobalt oxide as a positive electrode active material.

8. The non-aqueous electrolyte battery according to claim 3 or 4, wherein the positive electrode active material-layer contains lithium cobalt oxide as a positive electrode active material, and the total mass of the lithium cobalt oxide is greater than the total mass of the spinel-type lithium manganese oxide in the positive electrode active material-layer.

9. The non-aqueous electrolyte battery according to claim 5 or 6, wherein the positive electrode active material-layer contains lithium cobalt oxide as a positive electrode active material, and the total mass of the lithium cobalt oxide is greater than the total mass of the olivine-type lithium phosphate compound in the positive electrode active material-layer.

10. The non-aqueous electrolyte battery according to any one of claims 7 through 9, wherein the lithium cobalt oxide exists in the outermost positive electrode layer.

11. The non-aqueous electrolyte battery according to any one of claims 1 through 10, wherein the separator has a meltdown temperature of 180°C or higher.

12. The non-aqueous electrolyte battery according to claim 11, wherein the separator is an electron-beam cross-linked separator, in which cross-linking is effected by irradiating a microporous polyethylene film with an electron beam.

13. The non-aqueous electrolyte battery according to claim 11, wherein the separator comprises a microporous polyethylene film, and a microporous film having a melting point of 200°C or higher stacked over the microporous polyethylene film.

14. The non-aqueous electrolyte battery according to claim 13, wherein the microporous film having a melting point of 200°C or higher is a microporous film made of polyamide, polyimide, or polyamideimide.

15. The non-aqueous electrolyte battery according to claim 14, wherein the microporous film made of polyamide, polyimide, or polyamideimide has a melting point of from 200°C to 400°C.

16. The non-aqueous electrolyte battery according to claim 5 or 6, further comprising a battery case for accommodating a power-generating element containing the positive and negative electrodes and the separator, the battery case being flexible.

FIG. 1

FIG. 2

## FIG. 3

## FIG. 4

## FIG. 5

## FIG. 6

## FIG. 7

Legend:
- —·—·— Voltage
- ——— Current
- - - - - Temperature

Axes:
- Left: Voltage (V) — 0, 2, 4, 6, 8, 10, 12, 14
- Right inner: Temperature (°C) — 0, 20, 40, 60, 80, 100, 120, 140
- Right outer: Current (mA) — 0, 3000
- X-axis: Time(min) — 0, 10, 20, 30, 40, 50, 60, 70, 80, 90, 100

EP 1 619 733 A1

## FIG. 8

EP 1 619 733 A1

FIG. 9

## FIG. 10

EP 1 619 733 A1

FIG. 11

EP 1 619 733 A1

## FIG. 12

EP 1 619 733 A1

## FIG. 13

EP 1 619 733 A1

**European Patent Office**

## EUROPEAN SEARCH REPORT

Application Number

EP 05 01 5785

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHO J ET AL: "IMPROVEMENT OF STRUCTURAL STABILITY OF LIMN2O4 CATHODE MATERIAL ON 55 DEG C CYCLING BY SOL-GEL COATING OF LICOO2" ELECTROCHEMICAL AND SOLID-STATE LETTERS, IEEE SERVICE CENTER, PISCATAWAY, NJ, US, vol. 2, no. 12, 1999, pages 607-609, XP009018016 ISSN: 1099-0062 * the whole document * | 1-4,7,10 | H01M4/48 H01M4/50 H01M4/52 |
| X,D | PATENT ABSTRACTS OF JAPAN vol. 2000, no. 22, 9 March 2001 (2001-03-09) & JP 2001 143708 A (JAPAN STORAGE BATTERY CO LTD), 25 May 2001 (2001-05-25) * abstract * | 1-7,10 | |
| X | US 6 159 636 A (WANG ET AL) 12 December 2000 (2000-12-12) * example 8 * | 1-4 | |
| | | | TECHNICAL FIELDS SEARCHED (Int.Cl.7) |
| X | US 5 677 083 A (TOMIYAMA ET AL) 14 October 1997 (1997-10-14) * table 1 * | 1-4,7,8, 10 | H01M |

The present search report has been drawn up for all claims

| Place of search | Date of completion of the search | Examiner |
|---|---|---|
| Munich | 14 September 2005 | Koessler, J-L |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 01 5785

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2005

| Patent document cited in search report | | Publication date | Patent family member(s) | | Publication date |
|---|---|---|---|---|---|
| JP 2001143708 | A | 25-05-2001 | NONE | | |
| US 6159636 | A | 12-12-2000 | NONE | | |
| US 5677083 | A | 14-10-1997 | JP 9167618 | A | 24-06-1997 |

For more details about this annex : see Official Journal of the European Patent Office, No. 12/82